# EUROPÄISCHE PATENTSCHRIFT

(11) **EP 1 462 361 B1**
(45) Veröffentlichungstag und Bekanntmachung des Hinweises auf die Patenterteilung: **28.06.2006**
(21) Anmeldenummer: 04004098.2
(22) Anmeldetag: 24.02.2004
(51) Int. Cl.: B64C 13/50

(54) **Klappensystem am Tragflügel eines Starrflügel-Flugzeuges**
Airplane high lift surface drive system
Système de commande d'un dispositif hypersustentateur d'avion

(30) Priorität: 27.03.2003 DE 10313728
(43) Veröffentlichungstag der Anmeldung: 29.09.2004
(73) Patentinhaber: Airbus Deutschland GmbH, 21129 Hamburg (DE)
(72) Erfinder: Recksiek, Martin, Dipl.-Ing., 21109 Hamburg (DE); Rechter, Harald, Dipl.-Ing., 28816 Stuhr (DE); Besing, Wolfgang, Dipl.-Ing., 27711 Osterholz Scharmbeck (DE)
(74) Vertreter: Hansmann, Dierk

(56) Entgegenhaltungen:
- EP-A- 0 483 504
- EP-A- 1 038 765
- US-A- 4 688 744
- US-A- 4 892 274
- US-A- 5 743 490
- US-A- 5 875 998

## Beschreibung

Die Erfindung bezieht sich auf ein Klappensystem am Tragflügel eines Starrflügel-Flugzeuges entsprechend dem Oberbegriff des Anspruchs 1.

Die Fachwelt versteht unter einem Flugzeug, dessen Tragflügel starr am Flugzeugrumpf befestigt sind, i. e. S. (nur noch) den Starrflügler, dessen Vorbild man in der zivilen Luftfahrt mit dem Einsatz von modernen Verkehrsflugzeugen, beispielsweise vom Typ "Boeing" oder "Airbus", beobachten wird. An den Tragflügelhälften dieser Verkehrsflugzeuge sind in Spannweitenrichtung mehrere Vorder- und Hinterkantenklappen (Flaps und Slats) verteilt angeordnet, die an der Flügelvorder- und - hinterkante des Tragflügels beweglich angebracht sind. Dabei handelt es sich um Einrichtungen, mit denen die Strömungsverhältnisse am Tragflügel dermaßen beeinflusst werden, dass der Auftrieb von Flugzeugen beim Start und bei der Landung erhöht wird. Der Fachwelt sind derartige Einrichtungen allgemein unter dem Begriff: "Auftriebshilfen" geläufig, die auch nach "Start- oder Landehilfen" unterschieden werden. Diese Auftriebshilfen werden im Flugzeugbau zu einem Klappensystem zusammengefasst, das von Einrichtungen der Flugsteuerung des Flugzeuges überwacht und auf die Flugsituation bezogen geregelt wird, um beispielsweise den Start und die Landung eines Flugzeuges auf der Rollbahn (Piste) eines Flughafens störungs- und / oder fehlerfrei umzusetzen. In Abhängigkeit der aktuellen Flugdaten des Flugzeuges, die den Einrichtungen der Flugsteuerung ständig transferiert werden, wird mit den (dem) tragflügelinstallierten Klappen(system) situationsangepasst entweder die Wölbung des Tragflügelprofils verändert, die Flügelfläche vergrößert oder auch die Grenzschicht beeinflusst, wobei diese einzelnen Maßnahmen oft kombiniert werden.

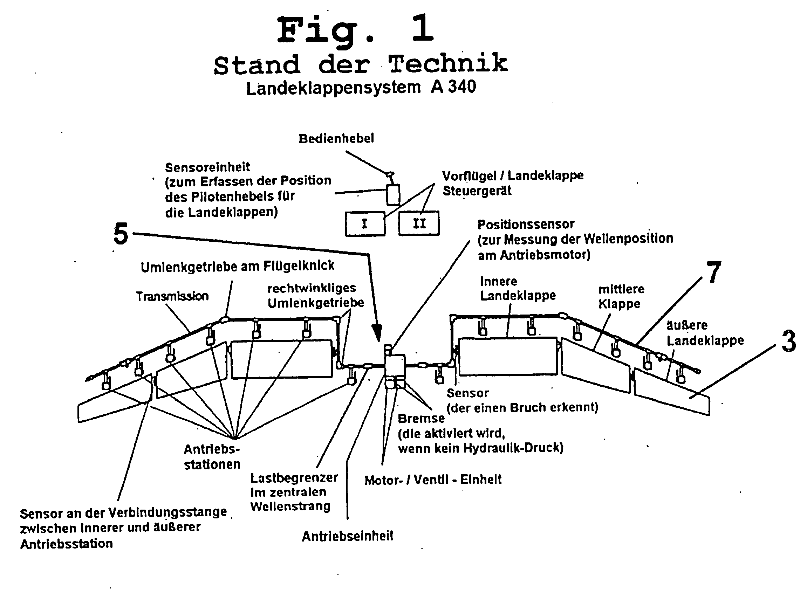

Bekannte Klappensysteme verwenden im allgemeinen durchgehende Transmissionswellen zur Leistungsübertragung zwischen zentralem Antriebsmotor und den Antriebesstationen der Flügelvorderkantenklappen (Slats) und Flügelhinterkantenklappen (Flaps). Diese Klappensysteme umfassen (im allgemeinen) einen zentralen Antrieb und einen zentralen Wellenstrang, die dem der Fig. 1, beispielsweise für ein Landeklappensystem des Flugzeuges vom Typ: Airbus - A340", entsprechen. Der Wellenstrang unterliegt einer ständigen Beobachtung durch ein Überwachungssystem, wobei pro Tragflügel eine wellenmechanisch gekoppelte Sicherheitsbremse mit integrierter Sensorenüberwachung angeordnet ist. Eine weitere Sicherheitsbremse mit integrierter Sensorenüberwachung ist im Zentralantrieb der Transmissionswelle integriert, wobei mit den Sensoren abweichende Positionsdifferenzen und Übergeschwindigkeiten erfasst werden. Sofern ein Bruch der Transmissionswelle auftreten sollte, bliebe nur der Teil an wellenmechanisch gekoppelten Klappen steuerfähig, der mit dem Zentralantrieb verbunden ist, wobei die übrigen Klappen aerodynamisch sich nicht mehr kontrollieren lassen. Mit der Nichtkontrolle einer einzelnen Klappe wird ein Wechselspiel der aerodynamischen Lasten stattfinden, das für das Flugzeug in einer Katastrophe enden kann.

Außerdem ist ein hoher Installationsaufwand für derartige Klappensysteme erforderlich, da die an der Flügelhinter- oder -vorderkante verlegte Transmissionswelle beim Übergang vom Flügel in den Rumpf mehrfach um Ecken geführt wird.

Da mit der Transmissionswelle eine "Zwangssynchronisierung des Landeklappensystems erfolgt, lässt sich auch eine Synchronisation der Klappen zwischen linken und rechtem Tragflügel zur Beherrschung asymmetrischer Klappenausschläge umsetzen, wobei (wie bekannt) ein zu großer asymmetrischer Klappenausschlag des Klappensystems zu kritischen Flugzuständen führen kann, die nicht mehr beherrschbar sind.

Weitere Nachteile eines zentralen Antriebes mit Transmissionswellen für Klappensysteme bestehen darin, dass neben dem hohen Installationsaufwand des Klappensystems letzteres einen schlechten Wirkungsgrad aufweist. Außerdem ist eine aufwendige Auslegung des hochdynamischen FederMasse-Dämpfungssystems des Transmissionswellenstrangs erforderlich.

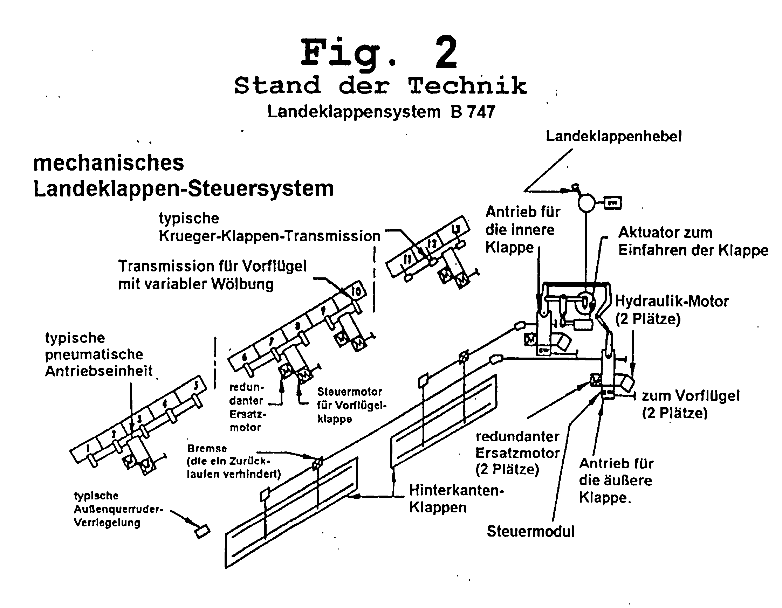

Daneben sind aus Redundanzgründen auch Lösungen mit zwei Wellensträngen bekannt, wobei aber die Klappen der linken und rechten Tragflügelhälfte mechanisch miteinander gekoppelt sind. Letztere Lösung entspricht dem Vorbild der Fig. 2, beispielsweise für ein Landeklappensystem des Flugzeuges vom Typ: "BOEING - B747". Dabei werden die inneren Klappen und die äußeren Klappen mit je einem Antrieb wellenmechanisch gekoppelt und dadurch synchronisiert.

Außerdem ist es am Beispiel eines Flugzeuges vom Typ: "DC9" und "DC10" bekannt, am Tragflügel angebrachte Klappen mit Einzelantrieben zu bewegen, wobei diese Einzelantriebe hydro-mechanisch gekoppelt und aufwendig synchronisiert werden. So werden zum Bewegen pro Klappe zwei HydraulikZylinder eingesetzt, wobei jeder einzelne Antrieb einem Hydrauliksystem angeschlossen ist, aufgrund dessen Erweiterungen der Funktionalitäten des Klappensystems unmöglich sind. Derartigen Klappensystemen haftet der Nachteil an, dass bei lokalem Antrieb mit Hydraulikzylinder sich nur eine einfache Klappen-Kinematik realisieren läßt. Durch die hydraulische Kopplung ist kein einzelnes Verfahren einer Klappe möglich, da alle Klappen den gleichen Drucknetzen angeschlossen sind. Auch werden sich Fehlerfälle am Klappensystem während des Fluges kaum lokalisieren lassen, wobei eine Fehlersuche während des Bodenaufenthaltes des betroffenen Flugzeuges wahrscheinlich zeitlich aufwendig sein wird.

Aus der US-A-5 875 998, ist ein Klappensystem für den Tragflügel eines Flugzeugs bekannt, bei dem die Klappen durch eine zentrale Klappensteuerungseinheit (Prozesscomputer) zur Verstellung der Flügelwölbung im Sinne einer Verbesserung der aerodynamischen Eigenschaften des Flügels verstellbar sind, wobei die für die Erzeugung der Stellsignale erforderlichen Daten der zentralen Klappensteuerungseinheit durch für die Strömung am Flügel charakteristische, durch entsprechende Sensoren gewonnene Messwerte zugeführt werden. Die Klappen werden von der zentralen Klappensteuerungseinheit einzeln angesteuert. Jede Klappe ist mit zwei elektronisch gesteuerten Aktuatoren, wobei diese Aktatoren von der zentralen Steuerungseinheit gemeinsam zusammen angesteuert werden, so dass sie exakt den von der zentralen Klappensteuerungseinheit vorgegebenen Winkel annehmen. Eine Kopplung der Antriebe durch eine welle und damit ein redundante Antriebspfad ist bei diesem bekannten KlappenSystem nicht vorgesehen

Aus der US-A-5 743 490 ist ein Klappensystem am Tragflügel eines Flugzeugs bekannt, bei dem die Klappen von einer zentralen Antriebseinheit über einen Torsionswellenstrang und auf diesem angeordnete Führungsgetriebe betätigt werden und bei dem zur Vermeidung von Asymmetrien an den beiden Tragflügelenden jeweilige Asymmetriebremsen vorgesehen sind.

Weiter ist aus der US-A-4 688 744 ein Klappensystem am Tragflügel eines Flugzeugs bekannt, bei dem ein Torsionswellenstrang zur Betätigung der Klappen von einer zentralen Antriebseinheit an der Flügelwurzel angetrieben wird. Zur Vermeidung oder zum Lösen eines Klemmens im Torsionswellenstrang ist eine weitere zentrale Antriebseinheit vorgesehen, die über eine flexible Welle lösbar mit dem an der Flügelaußenseite liegenden Ende der Torsionswelle gekoppelt ist.

Außerdem ist aus der US 4 892 274 ein Klappensystem am Tragflügel eines Flugzeugs bekannt, bei dem die Klappen von einer zentralen Antriebseinheit über einen gemeinsamen Torsionswellenstrang und auf diesem angeordnete Spindelgetriebe betätigt werden, wobei jeder Klappe mindestens zwei Spindelgetriebe zugeordnet sind. Durch in dem Torsionswellenstrang zwischen zwei derselben Klappe zugeordneten Spindelgetrieben vorgesehene Differentialgetriebe können die Spindelgetriebe im Sinne einer Torsion der Klappen über die Spannweitenrichtung unterschiedlich betätigt werden.

Demzufolge liegt der Erfindung die Aufgabe zugrunde, eine Verbesserung der bekannten Lösungen für das Klappensystem eines Starrflügel-Flugzeuges bereitzustellen, mit der eine Erhöhung der Verfügbarkeit der Klappenfunktionen, die von einer höheren Funktionsflexibilität des Klappensystems begleitet wird, umgesetzt wird.

Diese Aufgabe wird durch die in Anspruch 1 angegebenen Maßnahmen gelöst. In den weiteren Ansprüchen sind zweckmäßige Ausgestaltungen dieser Maßnahmen angegeben.

Dabei ist es insbesondere von Vorteil, dass ein denkbarer Wellenbruch einer Antriebswelle, mit denen (über der) die Antriebe für eine Klappe wellenmechanisch gekoppelt sind, während des Fluges die Steuerungs- und Überwachungsfunktion des Klappensystems nicht wesentlich einschränken oder zu dessen Totalausfall führen wird. Ein weiterer Vorteil besteht darin, dass eine Reduzierung der dynamischen Probleme von mit langen Transmissionswellen ausgerüsteten Klappensystemen und ein mit weniger Reibung der Antriebe und Klappen betriebenes Klappensystem an Tragflügeln umgesetzt wird. Gleichermaßen wird eine Reduzierung des Installationsaufwandes und eine Verbesserung der Wartbarkeit des Klappensystems erreicht werden.

Die Erfindung ist anhand der Zeichnung dargestellt und nachfolgend näher erläutert. Es zeigen
- Fig. 1: das Landeklappensystem eines Flugzeuges vom Typ: "AIRBUS A340";
- Fig. 2: das Landeklappensystem eines Flugzeuges vom Typ: "BOEING B747";
- Fig. 3: ein Klappensystem mit einzeln angetriebenen Hinterkantenklappen;
- Fig. 4: ein Klappensystem mit Darstellung von Einzelantrieben für Hinterkantenklappen;
- Fig. 5: ein Klappensystem mit Einzelantrieben für teilweise gekoppelte Vorder- und Hinterkantenklappen;
- Fig. 6: eine Darstellung wellenmechanisch verbundener und elektronisch synchronisierte Einzelantriebe an einer von diesen mechanisch gekoppelten Klappe;
- Fig. 7: eine nicht erfindunggemäße Darstellung von elektronisch synchronisierten Einzelantrieben an einer von diesen mechanisch gekoppelten Klappe.

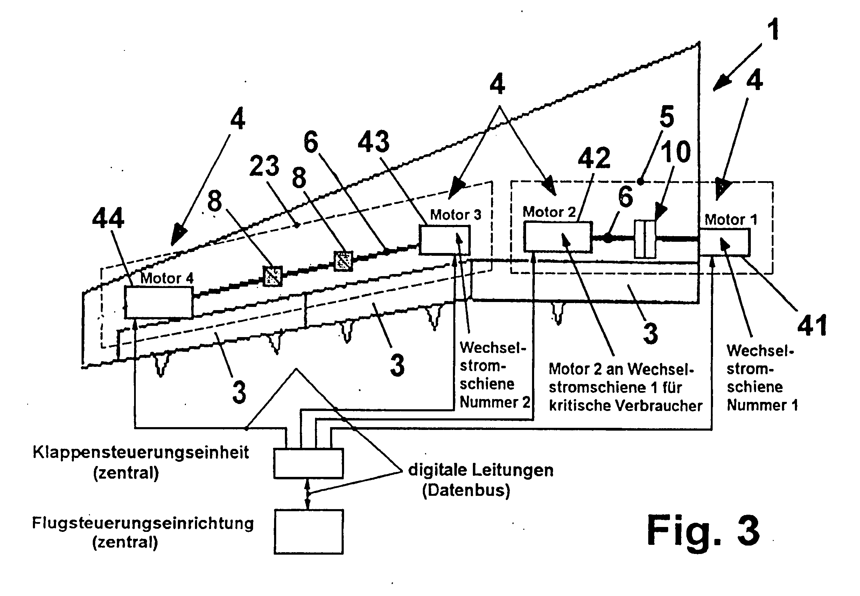

Bereits einleitend werden Landeklappensysteme für Flugzeuge vom Typ: Airbus A340" und "Boeing B747" beschrieben, die in den Figuren 1 und 2 dargestellt sind. Diese beiden Klappensysteme, die neben einem weiteren Klappensystem für ein Flugzeug vom Typ: "DC9" und DC10" den Stand der Technik repräsentieren, sind insofern von Interesse, da nach einem ersten bildlichen Vergleich dieser bekannten Klappensysteme mit den nachfolgenden angegebenen Ausführungsformen des beispielgemäßen Klappensystems nach den Figuren 3 bis 7 einem Fachmann die bestehenden Unterschiede deutlicher werden, die hintergründig dem weiteren Verständnis der nachfolgenden Ausführungen förderlich sind.

Hintergründig wird erwähnt, dass die gegenwärtigen Herausforderungen im Luftverkehr, die sich beispielsweise auf die Zunahme des Luftverkehrsaufkommens, die Forderung nach Lärmreduktion und die Umsetzung einer höheren Flexibilität in den An- und Abflugbahnen eines Flugzeuges beziehen, erhöhte Anforderungen an die funktionelle Flexibilität und die Verfügbarkeit von Klappensystemen am Tragflügel 1 stellen. Die Forderungen nach höherer funktionaler Flexibilität und einer Erhöhung der Verfügbarkeit im Fehlerfall des Klappensystems gibt Veranlassung dazu, über Lösungen für Klappensysteme nachzudenken, bei denen eine wellenmechanische Verbindung der Klappenantriebe mit einer Transmissionswelle nach dem Vorbild der Fig. 1 aus den eingangs geschilderten Nachteilen ausgeschlossen wird. Es wird eine Verbesserung der bekannten Klappensysteme angestrebt, die (nach den Figuren 3 bis 6) einzelne Antriebe 4, 41 bis 44 berücksichtigt, die an der betreffenden Klappe (Vorder- und / oder Hinterkantenklappe 2, 3) mechanisch gekoppelt sind, um deren Bewegung respektive Veränderung in eine gewünschte aerodynamische Klappenstellung während des Fluges (vordergründig zugunsten der Auftriebserhöhung des Flugzeuges beim Start oder bei der Landung durch Beeinflussung der Strömungsverhältnisse am Tragflügel 1) umzusetzen.

Diese Einzelantriebe werden dermaßen synchronisiert, dass in allen Flugsituationen ein tragflügelspannweitig differenzierter Klappenausschlag als auch ein gleich großer Klappenausschlag am linken und rechten Tragflügel 1 möglich wird.

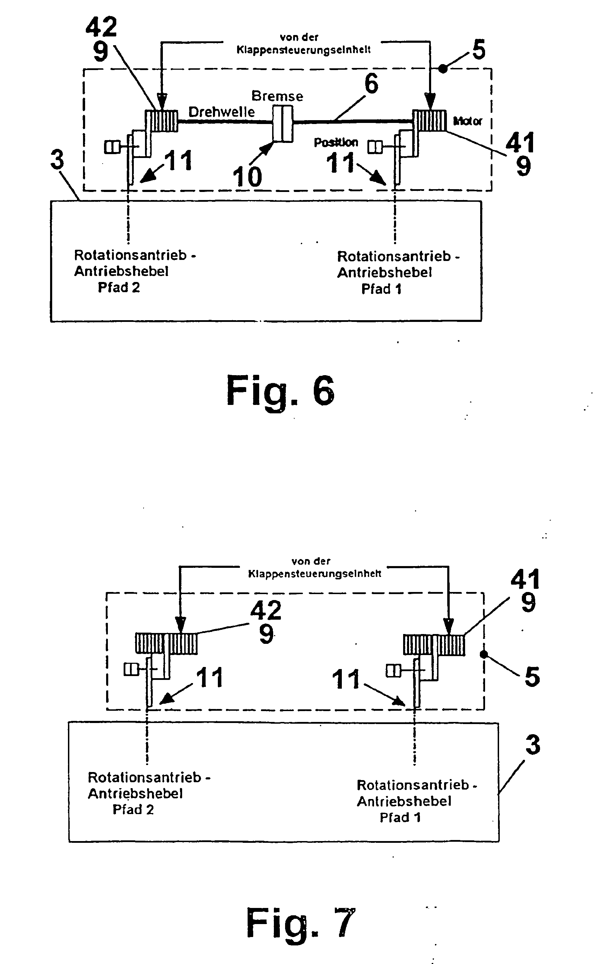

So wird in den Figuren 6 und 7 jeweils ein Systemdesign für Einzelantriebe einer Klappe (Vorder-oder Hinterkantenklappe 2, 3) vorgestellt, das Bestandteil eines am Tragflügel 1 installierten Klappensystems ist. Dieser Anordnung von zwei Antrieben 41, 42, die mit einem Stellmotor 9 ausgeführt werden, wird man in den Figuren 3 bis 5 wiederholt begegnen, welche denkbare Ausführungen für ein Klappensystem am (an den) Tragflügel(n) 1 repräsentieren.

Eine nicht erfindungsgemäße Ausführung wird in der Fig. 7 dargestellt. Sie umfasst einen ersten Antrieb 41 und einen zweiten Antrieb 42 an einer Klappe (Vorder- und / oder Hinterkantenklappe 2, 3), die in diesem Fall nicht mechanisch gekoppelt sind und daher bei der Klappenverstellung untereinander elektrisch synchronisiert werden müssen. Beide Antriebe 41, 42 sind mit einer (flugzeugintern positionierten) zentralen Klappensteuerungseinheit über Signal- oder Steuerleitungen (über Datenleitungen) informationstechnisch verbunden. Die Antriebe 41, 42 werden durch die Klappensteuerungseinheit einzeln angesteuert. Da eine Verzweigung dieser Leitungsverbindung (aus welchen Gründen auch immer) denkbar wäre, wird davon ausgegangen, dass (aus Gründen der versorgungszuverlässigen Übertragung von Informationen, hier: Stellsignale) eine direkte Ansteuerung des einzelnen Antriebs 41 und / oder 42 durch diese Klappensteuerungseinheit erfolgen wird. Außerdem ist die genannte Klappensteuerungseinheit mit einer (flugzeugintern positionierten) zentralen Flugsteuerungseinrichtung verbunden, die während des Fluges mit aktuellen Flugdaten versorgt wird und nach einem geschehenen Soll / Ist-Vergleich der aktuellen Flugdaten mit vorgegebenen Flugdaten, worauf nicht näher eingegangen wird, in Abhängigkeit des Ergebnisses des erfolgten Vergleichs entsprechende Stellinformationen zur Veränderung der aktuellen Flugsituation ableitet, die der Klappensteuerungseinheit transferiert werden. Letztere wird die erhaltenen Stellinformationen in entsprechende Stellsignale umsetzen, die den einzelnen Antrieb 41, 42 (respektive den Stellmotor 9 des Antriebs 41, 42) mit einem Stellbefehl erreichen werden, der daraufhin durch die mechanische Kopplung des Motors mit der Klappe letztere in die gewünschte Klappenstellung fahren wird. Ein Übersichtsschaltbild, aus welchem die leitungsbezogene (informationsübertragene) Verbindung der (zentralen) Flugsteuerungseinrichtung und der Klappensteuerungseinheit mit einem (allgemein bezeichneten) Antrieb 4 anschaulich wird, vermittelt allgemein die Fig. 3, nach deren Vorbild die entsprechenden Leitungsverbindungen zur Ansteuerung eines einzelnen Antriebs 4, 41 bis 44 nach den Figuren 3 bis 6 realisiert werden.

An dieser Stelle wird erwähnt, dass die zentral gelegene Flugsteuerungseinrichtung und die zentral gelegene Klappensteuerungseinheit (jeweils) mit redundanten Steuerungsrechnern realisiert sind.

Es besteht die Möglichkeit, dass mehrere dezentral gelegene Klappensteuerungseinheiten, die ebenfalls mit einem Steuerungsrechner realisiert und flugzeug- oder tragflügelintern nahe der Klappenvorder- oder-hinterkante gelegen angeordnet sind, mit der zentralen Klappensteuerungseinheit verbunden sind.

Auch lässt sich vorstellen, dass die einzelne dezentrale Klappensteuerungseinheit in dem Antrieb 4 integriert ist.

Da (auf alle Ausführungen nach den Figuren 3 bis 7 bezogen) beabsichtigt wird, die erwähnten Stellinformationen und Stellsignale / Stellbefehle in elektronischer Form zu transferieren, werden beispielsweise alle Leitungsverbindungen mit digitalen Datenleitungen ausgeführt, wobei dann der Steuerteil der Antriebe 4, 41 bis 44 ebenfalls befähigt ist, die erhaltenen digitalisierten Informationen und Signale zu verarbeiten und über den mechanischen Antriebsteil zur Veränderung der Klappenstellung zu übertragen. Andererseits besteht die Möglichkeit, die erwähnten Stellinformationen und Stellsignale / Stellbefehle analog über Steuer- und Signalleitungen zu transferieren, die dann vom Steuerteil jener Antriebe 4, 41 bis 44. entsprechend verarbeitet werden.

Wie bereits angedeutet - werden die Antriebe 4, 41 bis 44 (auf alle Ausführungen bezogen) jeweils einen Drehantrieb aufweisen, der aus einem Stellmotor 9, einem Stellgetriebe und (für die Antriebsfunktion entsprechenden) Zusatzeinrichtungen besteht. Der verwendete Stellmotor 9 kann ein Schrittmotor sein, dessen erzeugtes Motordrehmoment mit gesteuerter Stellgeschwindigkeit auf die drehbeweglich gelagerte Welle 6 übertagen wird. Es kann ein elektrisch oder elektronisch angesteuerter Motor (Gleichstrom-Motor) eingesetzt werden, der eben von der betreffenden Klappensteuerungseinheit angesteuert wird.

Es besteht auch die Möglichkeit, dass man der einzelnen Vorder- und / oder Hinterkantenklappe 2, 3 mehr als (nur) zwei Antriebe 41, 42 mechanisch koppelt, sofern man das Risiko einer nicht umsetzbaren Klappenveränderung in Grenzen halten möchte und der unvorhersehbare Ausfall eines ersten und zweiten Antriebs 41, 42 gleichermaßen bedacht wird. Dann wird auch jeder weitere (neben dem zweiten Antrieb 42) installierte Antrieb vordergründig als redundanter Antrieb zu dem angegebenen Zweck benutzt werden.

Ferner berücksichtigt das vorgestellte Systemdesign, dass mindestens zwei Antriebe 41, 42 (also: mit Motoren ausgestattete Einzelantriebe) eine Antriebsstation 5 bilden, wobei die Antriebe 41, 42 der zentralen Klappensteuerungseinheit oder der betreffend zugeordneten dezentralen Klappensteuerungseinheit leitend [und vorzugsweise direkt] verbunden sind, welche in der Hauptsache synchron (oder denkbar auch wahlweise) ansteuerbar sind.

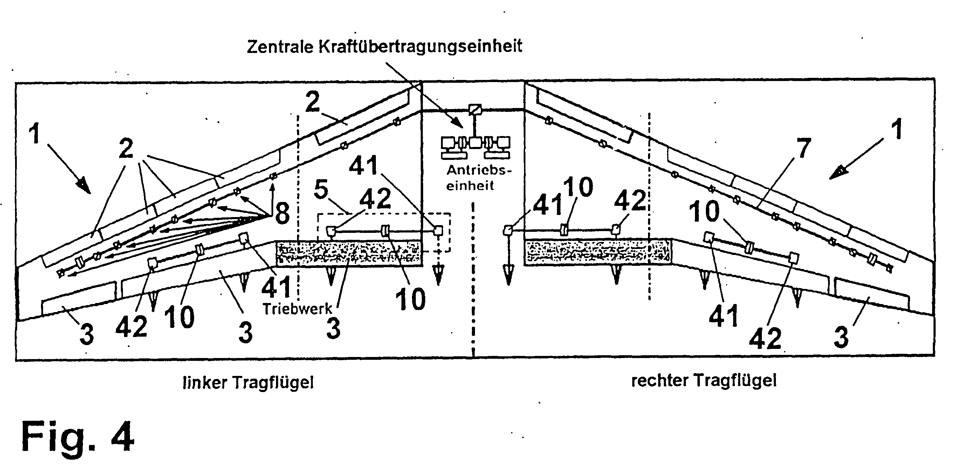

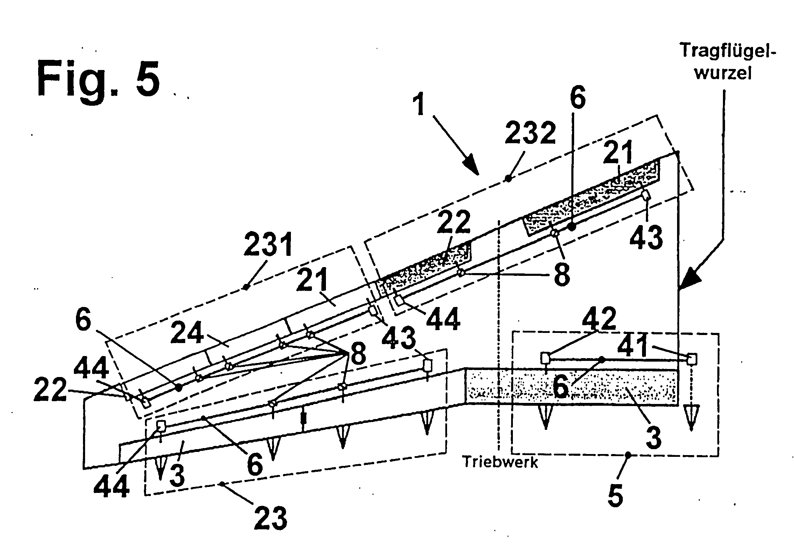

Nach der Fig. 6 sind der erste und der zweite Antrieb 41, 42 (wie auch jeder weitere installierte Antrieb) über eine drehbeweglich gelagerte Welle 6, die als Torsionswelle verwendet wird, wellenmechanisch verbunden. Damit wird eine Möglichkeit geschaffen, dass bei einem Ausfall (oder einer Störung) des ersten Antriebs 41 somit der verbleibende zweite Antrieb 42 (oder denkbar ein weiterer Antrieb) die betreffende wellenmechanisch gekoppelte Klappe (Vorder- und / oder Hinterkantenklappe 2, 3) mit reduzierter Geschwindigkeit antreiben kann. Es wird hinzugefügt, dass entsprechend dem Vorbild nach der Fig. 6 vorgesehen wird, der drehbeweglich gelagerten Welle 6 eine auf der Welle angeordnete (elektrisch oder elektronisch ansprechbare) Wellenbremse 10 zu installieren, die zwischen dem ersten und dem zweiten Antrieb 41, 42 positioniert ist und der zentralen oder der betreffenden dezentralen Klappensteuerungseinheit leitend [und direkt] verbunden ist. Allgemein betrachtet wird, wie auch in der Fig. 4 dargestellt, also vorgesehen, dass diese Wellenbremse 10 immer zwischen zwei benachbarten (und hier: einer Hinterkantenklappe 3 mechanisch gekoppelten) Antrieben 41, 42 positioniert ist. Diese Wellenbremse 10 wird als Führungsbremse eingesetzt, an der ein Sensor 11 [Positionssensor] auf der Welle 6 installiert ist, welcher zur Beobachtung der Wellenlage und der Veränderungen der Drehbewegung der Welle 6 eingesetzt wird. Die Sensorlage wird in den Figuren 6 und 7 mit einem Pfeil angedeutet, welche sich auf alle übrigen Ausführungen nach den Figuren 3 bis 5 übertragen lässt. Die leitende Verbindung des Sensors 11 mit der zentralen oder betreffenden dezentralen Klappensteuerungseinheit beruht darauf, dass mit dem Sensor 11 eine Erfassung der Lage der Welle 6 und deren Drehbewegung (Kraftübertragung in Transmissionen) sensitiv vorgenommen und [nach geschehener (digitaler) Signalwandlung] eine informationstechnisch Übermittlung an die angeschlossene Klappensteuerungseinheit aktuell übermittelt wird. Letztere versorgt (daraufhin) über den Leitungsweg die Flugsteuerungseinrichtung mit aktuellen Zustandsinformationen, die im Störungsfall (daraufhin) das Fehlverhalten der Welle 6 rechentechnisch erfasst, auswertet und entsprechende Stellinformationen zur Kompensation und Beseitigung der Störung an die zentrale Klappensteuerungseinheit übermittelt, die bei direktem Anschluss der Antriebe 41 bis 44 der entsprechenden Antriebsstation 5 (daraufhin) entsprechende Stellbefehle zu Kompensation und Beseitigung der Störung umsetzt und auf dem Leitungsweg den betreffenden Antrieben 41, 42 (nach den Figuren 3 bis 6) als auch den Antrieben 43, 44 (nach den Figuren 3 und 5) der entsprechenden Antriebsstation 5 setzt.

Anderenfalls wird die entsprechende Stellinformation zur Kompensation und Beseitigung der Störung über die zentrale Klappensteuerungseinheit der (oder den) betreffenden dezentralen Klappensteuerungseinheit(en) zugeleitet, die (daraufhin) den betreffenden Antrieben 41 bis 44 der entsprechenden Antriebsstation 5 das entsprechende Stellsignal zur Kompensation und Beseitigung der Störung (Veränderung der Wellen-Störsituation) setzten wird (werden).

Hinsichtlich aller Ausführungen nach den Figuren 3 bis 6 wird allgemein - auf das gestörte Verhalten eines Antriebs 41 bis 44 bezogen - dargestellt, dass ein Ernstfall, der beispielsweise ein Verkanten zweier benachbarter Hinterkantenklappen 3 (nach den Figuren 3 bis 5) voraussetzen würde, zu einem Abschalten der Antriebe 41, 42 und 43, 44 zweier benachbarter Antriebsstationen 5 führen wird. Da aber - ausgenommen dem ersten Antrieb 41 - der zweite Antrieb 42 oder ein weiterer Antrieb einer Antriebsstation 5 als ein redundanter Antrieb eingesetzt ist, besteht die Möglichkeit, mit diesem redundanten Antrieb ein Verkanten der wellenmechanisch gekoppelten einzelnen Vorder- oder Hinterkantenklappe 2, 3 zu korrigieren, sofern eine Störung oder ein Ausfall des ersten Antriebes 41 vorliegt.

Zurückkommend auf die Fig. 3 vermittelt diese Darstellung einen linken Tragflügel 1, dem an der Tragflügelhinterkante eine Antriebsstation 5 und eine Klappenkörpergruppe 23 installiert ist. Es wird eine nahe der Wurzel des Tragflügels 1 gelegene Antriebsstation 5 gezeigt, die einen ersten und einen zweiten Antrieb 41, 42 (Einzelantriebe) aufweist, welche der Hinterkantenklappe 3 mechanisch gekoppelt und über eine drehbeweglich gelagerte Welle 6 (Torsionswelle) mechanisch verbunden sind. Neben dieser Antriebsstation 5 an Hinterkantenklappe 3 ist in Spannweitenrichtung betrachtet eine entfernt der Wurzel des Tragflügels 1 gelegene Klappenkörpergruppe 23 angeordnet. Letztere umfasst eine drehbewegliche Welle (Torsionswelle), der wellenendseitig jeweils ein Antrieb 43, 44 installiert ist. Der einzelne Antrieb 43, 44 ist der Welle 6 wellenmechanisch verbunden und der betreffenden Hinterkantenklappe 3 mechanisch gekoppelt. Dieser Hinterkantenklappe 3 sind zwei Führungsgetriebe 8 zugeordnet, die der Welle 6 mechanisch verbunden sind. Diese beiden Führungsgetriebe 8 sind zueinander und den Antrieben 43, 44 (definiert) beabstandet angeordnet. Die Ansteuerung der Antriebe 43, 44 wird nach dem vorher beschriebenen Vorbild (nach der Ausführung für einen ersten Antrieb 41 und einen zweiten Antrieb 42) umgesetzt.

In der Fig.4 werden mehrere nebeneinander positionierte Antriebsstationen 5 an der Flügelhinterkante eines linken und eines rechten Tragflügels 1 gezeigt, deren integrierte Antriebe 41, 42, die der betreffenden Hinterkantenklappe 3 mechanisch gekoppelt sind, nach dem geschilderten Vorbild (einer einzelnen Antriebsstation 5 - nach der Fig. 6) über eine drehbeweglich gelagerte Welle 6 (Torsionswelle) mechanisch verbunden sind.

Auch hier wird die Ansteuerung des ersten und des zweiten Antriebs 41, 42 der betreffenden Antriebsstation 5 nach dem vorbeschriebenen Vorbild umgesetzt. Außerdem wird der Betrachter an der Flügelvorderkante des linken und rechten Tragflügels 1 mehrere nebeneinander gelegene Vorderkantenklappen 2 erblicken, deren bewegliches Verfahren (bewegliche Veränderung) über mehrere zueinander beabstandete (nicht bezifferte) Führungsgetriebe, die einer Transmissionswelle 7 (Welle zur Übertragung der Antriebsenergie) wellenmechanisch verbunden und den gegenüberstehenden Vorderkantenklappen 2 wellenmechanisch gekoppelt sind, umgesetzt wird. Diese Transmissionswelle ist wellenmechanisch an eine zentrale Kraftübertragungseinheit (PCU) gekoppelt, wie eingangs hinsichtlich der bekannten Lösungen erläutert.

In der Fig. 5 wird der Betrachter an der Flügelhinterkante des (linken) Tragflügels 1 die vorher beschriebene Anordnung nach der Fig. 3 mit der Antriebsstation 5 und der Klappenkörpergruppe 23 entdecken, weshalb sich weitere Erläuterungen erübrigen. An der Flügelvorderkante dieses Tragflügels 1 sind zwei Klappenkörpergruppen 231, 232 nebeneinander angeordnet. Eine erste Klappenkörpergruppe 232 korrespondiert mit zwei nebeneinander gelegenen Vorderkantenklappen 21, 22, die nahe der Tragflügelwurzel verfahren werden. Diese Klappenkörpergruppe 232 umfasst ebenso eine drehbeweglich gelagerte Welle 6 (Torsionswelle), der wellenendseitig jeweils ein Antrieb 43, 44 installiert ist. Der wellenendseitig angeordnete Einzelantrieb ist der Welle 6 wellenmechanisch verbunden und der betreffenden Vorderkantenklappe 21, 22 mechanisch gekoppelt. Weiterhin umfasst diese Klappenkörpergruppe 232 zwei Führungsgetriebe 8, die zueinander im (definierten) Wellenabstand mit der Welle 6 mechanisch verbunden und der entsprechenden Vorderkantenklappe 21, 22 mechanisch gekoppelt sind. Diese Führungsgetriebe 8 besitzen außerdem einen (definierten) Wellenabstand zum wellenendseitig positionierten Antrieb 43, 44, welcher einem Klappen-Randbereich, der nahe einer Klappenseite, die sich in Richtung der Profiltiefe der betreffenden Vorderkantenklappe 21, 22 erstreckt, mechanisch gekoppelt ist, wobei ein dritter Antrieb 44 einem nahe der Tragflügelwurzel befindlichen Klappen-Randbereich einer ersten Vorderkantenklappe 21 (Slat 1) und ein vierter Antrieb 44 einem entfernt der Tragflügelwurzel befindlichen Klappen-Randbereich der nebengelegenen zweiten Vorderkantenklappe 22 (Slat 2) gekoppelt ist.

Der Vollständigkeit wird erwähnt, dass die in Richtung der Profiltiefe des Tragflügels 1 sich erstreckenden und nebeneinander gelegenen Klappenseiten der ersten und zweiten Vorderkantenklappe 21, 22 zueinander beabstandet sind, so dass ein ungehindertes Verfahren der Vorderkantenklappen 21, 22 gewährleistet wird.

Die zweite Klappenkörpergruppe 232 besitzt einen der ersten Klappenkörpergruppe 231 ähnlichen Aufbau, die mit zwei weiteren Führungsgetrieben 8 ergänzt wird. Letztere sind im Wellenabstand mit der Welle 6 mechanisch verbunden und einer weiteren dritten Vorderkantenklappe 24 (Slat 4) mechanisch gekoppelt, die der ersten und zweiten Vorderkantenklappe 21, 22 (Slat 3, Slat 5) zwischengeordnet und diesen klappen(rand)seitig nebengelegen ist. Außerdem sind diese weiteren Führungsgetriebe 8, die der dritten Vorderkantenklappe 24 mechanisch gekoppelt sind, dem betreffenden Führungsgetriebe 8, das der ersten und zweiten Vorderkantenklappe 21, 22 mechanisch gekoppelt ist, im (definierten) Wellenabstand beabstandet angeordnet.

Nach den beispielhaften Erläuterungen der Figuren 3 bis 7 werden folgende abschließende Betrachtungen gegeben. Im Gegensatz zu den bekannten Landeklappensystemen nach den Figuren 1 und 2 und (dem figürlich nicht dargestellten) Landeklappensystem für ein Flugzeug vom Typ: "DC9" und "DC10" wird ein verbessertes Landeklappensystem am Tragflügel 1 eines Starrflügel-Flugzeuges mit elektronisch synchronisierten Antrieben 41 bis 44 (Einzelantrieben) an den Landeklappen vorgeschlagen. Bei dieser Systemlösung nach den Figuren 3 bis 7 wird jede Klappe des Landeklappensystems einzeln angesteuert, so dass sowohl ein spannseitig differenzierter Ausschlag als auch ein zwischen dem linken und rechten Tragflügel 1 des Flugzeuges unterschiedlicher Ausschlag möglich wird. Eine Kopplung mehrerer Klappen 21 bis 24 auf einer Tragflügelhälfte ist weiterhin möglich und unabhängig von der jeweiligen Flügelkonfiguration. Eine denkbare Ausführung für ein Landeklappensystem mit Einzelantrieben wird in Fig. 4 für die Hinterkantenklappen (Flap 1, Flap 2) des linken Tragflügels angegeben, die man gleichermaßen (spiegelbildlich) am rechten Tragflügel vorfinden wird. Die Darstellung nach der Fig. 5 zeigt eine weitere denkbare Konfiguration mit Einzelantrieben für Vorder- und Hinterkantenklappen, wobei mehrere Klappen mechanisch gekoppelt sind. Die Antriebe an den einzelnen Antriebsstationen 5 einer Klappe nach den Figur 6 sind über eine Torsionswelle mechanisch gekoppelt. Die Synchronisation zwischen den Klappen des linken und rechten Tragflügels wird elektronisch erfolgen. Die Funktion der Überwachung und Synchronisation wird dabei von einer zentralen Klappensteuerungseinheit (einem zentralen Steuerrechner) als auch (denkbar) über denzentral angeordnete Klappensteuerungseinheiten (mehrere verteilte Steuerrechner) erfolgen. Die Verwendung von sogenannten "Smart Aktuatoren" mit lokaler Überwachungs- und Steuerungsfunktion ist ebenfalls denkbar.

Die Vorteile der einzeln angetriebenen Klappensysteme liegen (in der Hauptsache) darin, dass diese Klappensysteme sich durch eine höhere Funktionsflexibilität und eine Erhöhung der Verfügbarkeit (im Fehlerfall) auszeichnen, wobei außerdem eine Reduktion des Installationsaufwandes durch den Wegfall des komplexen "Shaft Routing" durch den Flugzeugrumpf eintreffen wird.

Wegen dem Wegfall der langen Transmissionswellen wird eine Reduzierung der dynamischen Probleme am Flugzeugkörper verzeichnet werden, wobei weniger Reibung auftreten und korrelierend ein geringerer Leistungsbedarf eintreffen wird. Auch wird eine verbesserte Wartbarkeit und eine (im Störungsfall) einfachere Fehlerlokalisierung bei derartig gestalteten Klappensystemen gesehen.

Mit dem vorgestellten Klappensystem-Design wird eine konkrete Umsetzung und eine detaillierte Auslegung des Landeklappensystems, gerade unter dem Aspekt der elektrischen / elektronischen Kontrolle der Positionierung einzelner Klappen zwecks Realisierung eines Gleichlaufs bei der Positionierung aller Klappen an der Flügelvorder- und hinterkante oder einer gewünschten unterschiedlichen Positionierung der einzelnen Klappen, greifbare Realität, was bei konventionellen Klappensystemen nicht möglich sein wird.

### Bezugszeichenliste

- 1: Tragflügel
- 2, 21, 22, 24: Vorderkantenklappe (Slat)
- 23, 231, 232: Klappenkörpergruppe
- 3: Hinterkantenklappe (Flap)
- 4, 41 bis 44: Antrieb
- 5: Antriebsstation
- 6: drehbeweglich gelagerte Welle; Torsionswelle
- 7: Transmissionswelle
- 8: Führungsgetriebe
- 9: Stellmotor
- 10: Wellenbremse
- 11: Sensor.

## Patentansprüche

1. Klappensystem am Tragflügel eines Starrflügel-Flugzeugs, das aus einem Vorderkantenklappensystem mit Vorderkantenklappen (2) und/oder einem Hinterkantenklappensystem mit Hinterkantenklappen (3) gebildet ist und von einer flugzeuginternen Flugsteuerungseinrichtung zentral überwacht wird, die während des Flugs mit aktuellen Flugdaten versorgt wird und in Abhängigkeit dieser Daten entsprechende Stellinformationen zur Veränderung von den am Tragflügel (1) beweglich angeordneten Vorder- und/oder Hinterkantenklappen (2, 3) ableitet und mit wenigstens einer zentralen Klappensteuerungseinheit leitend verbunden ist, bei dem die Vorder- und/oder Hinterkantenklappen (2, 3) mit flügelinternen Antrieben (4, 41 bis 44), die in Spannweitenrichtung des Tragflügels (1) nebeneinander gelegen angeordnet sind, mechanisch gekoppelt sind, wobei den Vorderkantenklappen (2) und/oder den Hinterkantenklappen (3) jeweils mehrere Antriebsstationen (5, 23) mit mindestens jeweils einer Klappe (2, 3) und mit jeweils zwei oder mehr von der zentalen Klappensteuerungseinheit elektrisch oder elektronisch ansteuerbaren, flügelinternen, mit den Klappen einer Antriebsstation (5, 23) gekoppelten Antrieben (4, 41 bis 44) mit einer Motor/Antriebseinheit zugeordnet sind, **dadurch gekennzeichnet,**
**dass** mehrere Antriebsstationen (5; 23) vorgesehen sind, die unabhängig voneinander antreibbar sind,
- **dass** eine Antriebsstation (5) eine einzige Klappe enthält und die flügelinternen Antriebe (41, 42) dieser Anthebsstation (5) mit dieser einzigen Klappe gekoppelt und über eine Welle (6) miteinander verbunden sind, oder
- **dass** eine Antriebsstation (23) mehrere Klappen enthält und die flügelinternen Antriebe (4, 41 bis 44) dieser Antriebsstation (5, 23) über eine Welle (6) miteinander verbunden sind,
und **dass** die flügelinternen Antriebe (4, 41 bis 44) der Antriebsstation (5, 23) mit der zentralen Klappensteuerungseinheit leitend verbunden und von dieser synchron oder im Störungsfall einzeln ansteuerbar sind.

2. Klappensystem nach Anspruch 1, **dadurch gekennzeichnet, dass** jede Klappe (2, 3) an zwei in Spannweitenrichtung voneinander beabstandeten Stellen durch einen Antrieb (4, 41 bis 44) mit einer Motor/Antriebseinheit und/oder durch ein mit der Welle (6) gekoppeltes Führungsgetriebe (8) angetrieben ist.

3. Klappensystem nach Anspruch 1 oder 2, **dadurch gekennzeichnet, dass** die Antriebe (43, 44) mehrerer nebeneinandergelegener und in Spannweitenrichtung des Tragflügels (1) angeordneter Vorder- oder Hinterkantenklappen (2, 3), die eine Klappenkörpergruppe (23) bilden, gemeinsam über eine drehbeweglich gelagerte Welle (6) mechanisch verbunden sind.

4. Klappensystem nach Anspruch 3, **dadurch gekennzeichnet, dass** jeder Vorder- oder Hinterkantenklappe (2, 3) wenigstens ein Führungsgetriebe (8) zugeordnet ist, das im Wellenabstand der Welle (6) mechanisch verbunden und mit der einzelnen Vorder- oder Hinterkantenklappe (2, 3) mechanisch gekoppelt ist.

5. Klappensystem nach Anspruch 3 oder 4, **dadurch gekennzeichnet, dass** wenigstens ein Antrieb einer nahe und einer entfernt der Wurzel des Tragflügels (1) angeordneten Vorder- oder Hinterkantenklappe (2, 3) mechanisch gekoppelt ist, wobei die Führungsgetriebe (8) mit denjenigen Vorder- oder Hinterkantenklappen (2, 3) mechanisch gekoppelt sind, die nebeneinander gelegen der nahe oder entfernt gelegenen Vorder- oder Hionterkantenklappe (2, 3) angeordnet sind und in Spannweitenrichtung des Tragflügels (1) die Klappenkörpergruppe (23) komplettieren.

6. Klappensystem nach einem der Ansprüche 1 bis 5, **dadurch gekennzeichnet, dass** die einzelnen angesteuerten Antriebe (41 bis 44), die mit zwei Antrieben (41, 42 oder 43, 44) oder mehr als zwei Antrieben (41 bis 44) eine Antriebsstation (5) bilden, wobei jeder weitere Antrieb, der hinzukommend den paarweise angeordneten Antrieben (41, 42 oder 43, 44) redundant erweitert ist, jeweils über Signal-oder Steuerleitungen mit der zentralen Klappensteuerungseinheit direkt verbunden sind und deswegen durch letztere direkt ansteuerbar sind, wobei mit jedem installierten weiteren Antrieb das Risiko einer nicht umsetzbaren Klappenveränderung, die durch den unvorhersehbaren Ausfall eines ersten und / oder eines zweiten Antriebs (41, 42 oder 43, 44) eintreten wird, in Grenzen gehalten wird.

7. Klappensystem nach einem der Ansprüche 1 bis 6, **dadurch gekennzeichnet, dass** die Antriebe (4, 41 bis 44) einer Antriebsstation (5) jeweils mit einem Stellmotor (9), vorzugsweise einem Schrittmotor, ausgestattet sind, dessen erzeugtes Motordrehmoment mit gesteuerter Stellgeschwindigkeit auf die Welle (6) oder direkt auf die betreffende Vorder- und / oder Hinterkantenklappe (2, 3) übertragen wird, wodurch bei einem Ausfall oder einer Störung des ersten Antriebs (41) somit der verbleibende zweite Antrieb (42) oder einer jener weiteren redundanten Antriebe die betreffende wellenmechanisch verbundene Vorder- oder Hinterkantenklappe (2, 3) antreiben wird oder aufgrund der mechanischen Kopplung des Stellmotors (9) mit der betreffenden Klappe letztere in eine gewünschte aerodynamische Klappenstellung bewegt wird.

8. Klappensystem nach Anspruch 7, **dadurch gekennzeichnet, dass** der Stellmotor (9) ein elektrisch oder elektronisch angesteuerter Motor, vorzugsweise ein Gleichstrommotor, ist, der von der Klappensteuerungseinheit angesteuert wird.

9. Klappensystems nach einem der Ansprüche 1 bis 8, **dadurch gekennzeichnet, dass** die zentrale Klappensteuerungseinheit und mehrere dezentral angeordnete Klappensteuerungseinheitendie der zentralen Klappensteuerungseinheit leitend verbunden sind, jeweils mit einem Steuerungsrechner realisiert sind, und die einzelne dezentrale Klappensteuerungseinheit, die dem jeweiligen Antrieb (4, 41 bis 44) zugeordnet ist, letzterem direkt leitend verbunden ist, wobei der Steuerungsrechner befähigt ist, eine Überwachung und eine synchrone oder wahlweise Ansteuerung der Antriebe (4, 41 bis 44) auf einer Vorder- oder Hinterkantenklappe (2, 3) umzusetzen.

10. Klappensystem nach Anspruch 9, **dadurch gekennzeichnet, dass** die dezentralen Klappensteuerungseinheiten tragflügelintern und nahegelegen der Klappenvorder- und / oder - hinterkante der Vorder- und / oder Hinterkantenklappe (2, 3) angeordnet sind.

11. Klappensystem nach Anspruch 9 oder 10, **dadurch gekennzeichnet, dass** die dezentrale Klappensteuerungseinheit den Antrieben (4, 41 bis 44) integriert ist.

12. Klappensystem nach einem der Ansprüche 1 bis 11, **dadurch gekennzeichnet, dass** zwischen den wellenmechanisch verbundenen benachbarten Antrieben (41, 42) eine am Wellenumfang der Welle (6) angeordnete Wellenbremse (10) positioniert ist, an der ein Positionssensor installiert ist, welcher der zentralen oder der betreffenden dezentralen Klappensteuerungseinheit leitend verbunden ist.

13. Klappensystem nach Anspruch 12, **dadurch gekennzeichnet, dass** der Positionssensor ein optischer Sensor (11) ist, der nahe der Welle (6) angeordnet ist, wobei der Sensor (11) zur Beobachtung der Wellenlage und der Veränderungen der Drehbewegung der Welle (6) eingesetzt wird.

14. Klappensystem nach den Ansprüchen 6 und 7, **dadurch gekennzeichnet, dass** ausgenommen dem ersten Antrieb (41) der zweite Antrieb (42) oder jener zusätzliche weitere Antrieb der Antriebsstation (5) ein redundanter Antrieb ist, mit dem ein Verkanten der wellenmechanisch gekoppelten einzelnen Vorder- oder Hinterkantenklappe (2, 3) korrigiert wird, sofern eine Störung oder ein Ausfall des ersten Antriebes (41) vorliegt.

15. Klappensystem nach einem der Ansprüche 1 bis 14, **dadurch gekennzeichnet, dass** dessen Systemdesign mehrere mit Motoren ausgestattete Einzelantriebe verwenden wird, die als flügelintegrierte Antriebe (4, 41 bis 44) berücksichtigt sind, mit denen sich eine individuelle Steuerung zur Verstellung der Vorder- oder Hinterkantenklappen (2, 3) für die Erhöhung des Auftriebs während des Fluges umsetzen lässt.

16. Klappensystem nach einem der Ansprüche 1 bis 15, **dadurch gekennzeichnet, dass** das Klappensystem aus einem Vorderkantenklappensystem mit Vorderkantenklappen (2) und einem Hinterkantenklappensystem mit Hinterkantenklappen (3) gebildet ist, wobei alle Vorder- und Hinterkantenklappen (2, 3) mit flügelinternen Antrieben (4, 41 bis 44), die in Spannweitenrichtung des Tragflügels (1) nebeneinander gelegen angeordnet sind, mechanisch gekoppelt sind, und wobei die flügelinternen Antriebe (4, 41 bis 44) einer Antriebsstation (5, 23) über eine Welle (6) miteinander gekoppelt sind und mit der zentralen Klappensteuerungseinheit leitend verbunden und von dieser synchron oder im Störungsfall einzeln ansteuarbar sind.

## Claims

1. Flap system on the wing of a fixed-wing aircraft, which system is formed from a leading edge flap system with leading edge flaps (2) and/or a trailing edge flap system with trailing edge flaps (3) and is monitored centrally by a flight control device inside the aircraft, which device is supplied during the flight with current flight data and depending on these data derives corresponding adjustment information for changing the leading and/or trailing edge flaps (2, 3) arranged movably on the wing (1) and is connected conductively to at least one central flap control unit, in which system the leading and/or trailing edge flaps (2, 3) are coupled mechanically to drives (4, 41 to 44) inside the wing, which drives are arranged situated adjacent to one another in span direction of the wing (1), the leading edge flaps (2) and/or the trailing edge flaps (3) being respectively assigned several drive stations (5, 23) with at least one flap (2, 3) in each case and with respectively two or more wing-internal drives (4, 41 to 44) with a motor/drive unit, which drives can be activated electrically or electronically by the central flap control unit and are coupled to the flaps of a drive station (5, 23), **characterized in that**
- several drive stations (5, 23) are provided, which can be driven independently of one another,
- one drive station (5) contains a single flap and the wing-internal drives (41, 42) of this drive station (5) are coupled to this single flap and connected to one another via a shaft (6), or
- one drive station (23) contains several flaps and the wing-internal drives (4, 41 to 44) of this drive station (5, 23) are connected to one another via a shaft (6),
- and the wing-internal drives (4, 41 to 44) of the drive station (5, 23) are connected conductively to the central flap control unit and can be activated by this synchronously or individually in the event of a malfunction.

2. Flap system according to claim 1, **characterized in that** each flap (2, 3) is driven at two points spaced at a distance from one another in span direction by a drive (4, 41 to 44) with a motor/drive unit and/or by a guide gear unit (8) coupled to the shaft (6).

3. Flap system according to claim 1 or 2, **characterized in that** the drives (43, 44) of several adjacently situated leading or trailing edge flaps (2, 3) arranged in span direction of the wing (1), which flaps form a flap body group (23), are jointly mechanically connected via a shaft (6) supported rotationally movably.

4. Flap system according to claim 3, **characterized in that** each leading or trailing edge flap (2, 3) is assigned at least one guide gear unit (8), which is connected mechanically at a shaft interval of the shaft (6) and is coupled mechanically to the individual leading or trailing edge flap (2, 3).

5. Flap system according to claim 3 or 4, **characterized in that** at least one drive of one leading or trailing edge flap (2, 3) arranged close to and one arranged remote from the root of the wing (1) is coupled mechanically, the guide gear units (8) being coupled mechanically to those leading or trailing edge flaps (2, 3) that are arranged situated adjacent to the leading or trailing edge flap located close to or remotely and that complete the flap body group (23) in span direction of the wing (1).

6. Flap system according to one of claims 1 to 5, **characterized in that** the individual activated drives (41 to 44), which with two drives (41, 42 or 43, 44) or more than two drives (41 to 44) form a drive station (5), each further drive added to the drives (41, 42 or 43, 44) arranged in pairs being expanded redundantly, are directly connected in each case via signal or control lines to the central flap control unit and can therefore be activated directly by the latter, the risk of being unable to implement a flap change, which risk will occur due to the unforeseeable failure of a first and/or second drive (41, 42 or 43, 44), being kept within limits with each further drive installed.

7. Flap system according to one of claims 1 to 6, **characterized in that** the drives (4, 41 to 44) of a drive station (5) are each equipped with a servomotor (9), preferably a stepping motor, the generated motor torque of which is transmitted at a controlled regulating speed to the shaft (6) or directly to the leading and/or trailing edge flap (2, 3) concerned, due to which in the event of a failure or malfunction of the first drive (41) thus the remaining second drive (42) or one of those further redundant drives will drive the leading or trailing edge flap (2, 3) concerned that is connected shaft-mechanically or due to the mechanical coupling of the servomotor (9) to the relevant flap the latter is moved into a desired aerodynamic flap position.

8. Flap system according to claim 7, **characterized in that** the servomotor (9) is an electrically or electronically activated motor, preferably a d.c. motor, which is activated by the flap control unit.

9. Flap system according to one of claims 1 to 8, **characterized in that** the central flap control unit and several flap control units arranged in a decentralized manner, which are connected conductively to the central flap control unit, are each realized with a control computer, and the individual decentralized flap control unit that is assigned to the respective drive (4, 41 to 44) is directly connected conductively to the latter, the control computer being capable of implementing monitoring and a synchronous or optional activation of the drives (4, 41 to 44) on a leading or trailing edge flap (2, 3).

10. Flap system according to claim 9, **characterized in that** the decentralized flap control units are arranged inside the wing and close to the flap leading and/or trailing edge of the leading and/or trailing edge flap (2, 3).

11. Flap system according to claim 9 or 10, **characterized in that** the decentralized flap control unit is integrated into the drives (4, 41 to 44).

12. Flap system according to one of claims 1 to 11, **characterized in that** positioned between the adjacent shaft-mechanically connected drives (41, 42) is a shaft brake (10) arranged on the shaft circumference of the shaft (6), on which brake a position sensor is installed, which is connected conductively to the central or relevant decentralized flap control unit.

13. Flap system according to claim 12, **characterized in that** the position sensor is an optical sensor (11), which is arranged close to the shaft (6), the sensor (11) being used to observe the shaft position and the changes in the rotational movement of the shaft (6).

14. Flap system according to claims 6 and 7, **characterized in that** except for the first drive (41), the second drive (42) or that additional further drive of the drive station (5) is a redundant drive, with which a jamming of the individual leading or trailing edge flap (2, 3) coupled shaft-mechanically is corrected if a malfunction or failure of the first drive (41) is present.

15. Flap system according to one of claims 1 to 14, **characterized in that** its system design will use several individual drives fitted with motors, which drives are taken into consideration as wing-integrated drives (4, 41 to 44), with which individual control can be implemented for adjusting the leading or trailing edge flaps (2, 3) to increase the lift during the flight.

16. Flap system according to one of claims 1 to 15, **characterized in that** the flap system is formed from a leading edge flap system with leading edge flaps (2) and a trailing edge flap system with trailing edge flaps (3), all leading and trailing edge flaps (2, 3) being coupled mechanically to drives (4, 41 to 44) inside the wing, which drives are arranged situated adjacent to one another in span direction of the wing (1), and the wing-internal drives (4, 41 to 44) of a drive station (5, 23) being coupled to one another via a shaft (6) and being connected conductively to the central flap control unit and being activatable by this synchronously or individually in the event of a malfunction.

## Revendications

1. Système de volets sur l'aile portante d'un avion à voilure fixe, ledit système étant formé par un système de volets de bord avant avec des volets de bord avant (2) et/ou par un système de volets de bord arrière avec des volets de bord arrière (3) et étant surveillé de manière centrale par un dispositif de commande de vol interne à l'avion, lequel est alimenté en données de vol instantanées et, en fonction de ces données, déduit des informations de positionnement appropriées pour modifier les volets de bord avant et/ou arrière (2, 3) montés mobiles sur l'aile portante (1) et est relié de manière conductrice à au moins une unité centrale de commande de volets, système dans lequel les volets de bord avant et/ou arrière (2, 3) sont couplés mécaniquement à des moyens d'entraînement internes aux ailes (4, 41 à 44) disposés côte à côte dans le sens de l'envergure, à chacun des volets de bord avant (2) et/ou des volets de bord arrière (3) étant associées plusieurs stations d'entraînement (5, 23) avec chacune au moins un volet (2, 3) et avec chacune deux ou plusieurs des moyens d'entraînement (4, 41 à 44) commandés électriquement ou électroniquement par l'unité centrale de commande de volets, internes aux ailes, couplés aux volets d'une station d'entraînement (5, 23) et associés à un module moteur/entraînement, **caractérisé en ce qu'**il est prévu plusieurs stations d'entraînement (5 ; 23) qui peuvent être commandées indépendamment les unes des autres, **en ce qu'**une station d'entraînement (5) renferme un volet individuel et les moyens d'entraînement internes aux ailes (41, 42) de cette station d'entraînement (5) sont couplés à ce volet individuel et reliés entre eux par l'intermédiaire d'un arbre (6), ou une station d'entraînement (23) renferme plusieurs volets et les moyens d'entraînement internes aux ailes (4, 41 à 44) de cette station d'entraînement (5, 23) sont reliés entre eux par l'intermédiaire d'un arbre (6), et **en ce que** les moyens d'entraînement internes aux ailes (4, 41 à 44) de la station d'entraînement (5, 23) sont reliés de manière conductrice à l'unité centrale de commande de volets et peuvent être commandés par celle-ci de manière synchrone ou, en cas de défaillance, individuellement.

2. Système de volets selon la revendication 1, **caractérisé en ce que** chaque volet (2, 3) est entraîné, en deux endroits distants l'un de l'autre dans le sens de l'envergure, par l'intermédiaire d'un moyen d'entraînement (4, 41 à 44) par un module moteur/entraînement et/ou par un mécanisme de guidage (8) couplé à l'arbre (6).

3. Système de volets selon la revendication 1 ou 2, **caractérisé en ce que** les moyens d'entraînement (43, 44) de plusieurs volets de bord avant ou arrière (2, 3), lesquels sont disposés côte à côte et dans le sens de l'envergure de l'aile portante (1) et forment un groupe de corps de volets (23), sont reliés mécaniquement entre eux par l'intermédiaire d'un arbre (6) monté mobile en rotation.

4. Système de volets selon la revendication 3, **caractérisé en ce qu'**à chaque volet de bord avant ou arrière (2, 3) est associé au moins un mécanisme de guidage (8) qui est relié mécaniquement à l'arbre à distance de celui-ci et qui est couplé mécaniquement au volet individuel de bord avant ou arrière (2, 3).

5. Système de volets selon la revendication 3 ou 4, **caractérisé en ce qu'**au moins un moyen d'entraînement est couplé mécaniquement à un volet de bord avant ou arrière (2, 3) disposé près ou loin de l'attache de l'aile portante (1), le mécanisme de guidage (8) étant couplé mécaniquement aux volets de bord avant ou arrière (2, 3) qui sont disposés à côté du volet de bord avant ou arrière près ou éloigné (2, 3) et complètent le groupe de corps de volets (23) dans le sens de l'envergure de l'aile portante (1).

6. Système de volets selon une des revendications 1 à 5, **caractérisé en ce que** les différents moyens d'entraînement (41 à 44) commandés, qui avec deux moyens d'entraînement (41, 42 ou 43, 44) ou plus de deux moyens d'entraînement (41 à 44) forment une station d'entraînement (5), chaque moyen d'entraînement supplémentaire, étant adjoint de manière redondante aux moyens d'entraînement (41, 42 ou 43, 44) disposés par paires, sont reliés directement à l'unité centrale de commande de volets par l'intermédiaire de lignes de signaux ou de commande et sont ainsi commandés directement par celles-ci, chaque moyen d'entraînement supplémentaire installé permettant de limiter le risque pour un volet de ne pas pouvoir changer de position à cause de la défaillance imprévisible d'un premier et/ou d'un second moyen d'entraînement (41, 42 ou 43, 44) .

7. Système de volets selon une des revendications 1 à 6, **caractérisé en ce que** les moyens d'entraînement (4, 41 à 44) d'une station d'entraînement (5) sont équipés chacun d'un moteur asservi (9), de préférence d'un moteur pas à pas, dont le couple-moteur produit est transmis, à la vitesse commandée, à l'arbre (6) ou directement au volet de bord avant et/ou arrière concerné (2, 3), en cas de défaillance ou de panne du premier moyen d'entraînement (41) le second moyen d'entraînement restant (42) ou un des moyens d'entraînement supplémentaires redondants actionnant ainsi le volet de bord avant ou arrière concerné (2, 3) relié par un arbre ou, du fait du couplage mécanique du moteur asservi (9) avec le volet concerné, ce dernier étant déplacé dans une position aérodynamique souhaitée.

8. Système de volets selon la revendication 7, **caractérisé en ce que** le moteur asservi (9) est un moteur à commande électrique ou électronique, de préférence un moteur à courant continu, qui est commandé par l'unité de commande de volets.

9. Système de volets selon une des revendications 1 à 8, **caractérisé en ce que** l'unité centrale de commande de volets et plusieurs unités autonomes de commande de volets, lesquelles sont reliées de manière conductrice à l'unité centrale de commande de volets, sont constituées chacune par un ordinateur de commande, et l'unité autonome individuelle de commande de volets associée à chaque moyen d'entraînement (4, 41 à 44) est reliée directement à celui-ci de manière conductrice, l'ordinateur de commande étant apte à assurer une surveillance et une commande synchrone ou sélective des moyens d'entraînement (4, 41 à 44) d'un volet de bord avant ou arrière (2, 3).

10. Système de volets selon la revendication 9, **caractérisé en ce que** les unités autonomes de commande de volets sont disposées à l'intérieur de l'aile portante et près du bord avant et/ou arrière du volet de bord avant et/ou arrière (2, 3).

11. Système de volets selon la revendication 9 ou 10, **caractérisé en ce que** l'unité autonome de commande de volets est intégrée aux moyens d'entraînement (4, 41 à 44).

12. Système de volets selon une des revendications 1 à 11, **caractérisé en ce qu'**entre les moyens d'entraînement voisins (41, 42) reliés par un arbre est positionné un frein d'arbre (10) qui est disposé en périphérie de l'arbre et sur lequel est installé un capteur de position, lequel est relié de manière conductrice à l'unité centrale de commande de volets ou à l'unité autonome correspondante de commande de volets.

13. Système de volets selon la revendication 12, **caractérisé en ce que** le capteur de position est un capteur optique (11) qui est disposé près de l'arbre (6), le capteur (11) servant à observer la position de l'arbre ou les variations du mouvement de rotation de l'arbre (6).

14. Système de volets selon les revendications 6 et 7, **caractérisé en ce que**, en dehors du premier moyen d'entraînement (41), le deuxième moyen d'entraînement (42) ou le moyen d'entraînement supplémentaire de la station d'entraînement (5) est un moyen d'entraînement redondant qui, en présence d'une panne ou d'une défaillance du premier moyen d'entraînement (41), permet de corriger un coincement du volet individuel de bord avant ou arrière (2, 3) couplé par un arbre.

15. Système de volets selon une des revendications 1 à 14, **caractérisé en ce que** son agencement fait appel à plusieurs moyens d'entraînement individuels qui sont équipés de moteurs et sont considérés comme moyens d'entraînement (4, 41 à 44) intégrés à l'aile, lesquels permettent d'effectuer une commande individuelle pour régler les volets de bord avant ou arrière (2, 3) afin d'augmenter la sustentation pendant le vol.

16. Système de volets selon une des revendications 1 à 15, **caractérisé en ce que** le système de volets est formé d'un système de volets de bord avant avec des volets de bord avant (2) et d'un système de volets de bord arrière avec des volets de bord arrière (3), tous les volets de bord avant et arrière (2, 3) étant couplés mécaniquement à des moyens d'entraînement (4, 41 à 44) internes aux ailes, lesquels sont disposés côte à côte dans le sens de l'envergure de l'aile portante (1), et les moyens d'entraînement internes aux ailes (4, 41 à 44) d'une station d'entraînement (5, 23) étant couplés entre eux par l'intermédiaire d'un arbre (6), étant reliés de manière conductrice à l'unité centrale de commande de volets et pouvant être commandés par celle-ci de manière synchrone ou, en cas de défaillance, individuellement.
